(19) **Europäisches Patentamt European Patent Office Office européen des brevets**

(11) **EP 4 593 430 A1**

(12) **EUROPEAN PATENT APPLICATION**

(43) Date of publication:
**30.07.2025 Bulletin 2025/31**

(21) Application number: **24153464.3**

(22) Date of filing: **23.01.2024**

(51) International Patent Classification (IPC):
**H04W 4/021** (2018.01)    **H04W 4/38** (2018.01)
**H04W 4/70** (2018.01)    **H04W 8/00** (2009.01)

(52) Cooperative Patent Classification (CPC):
**H04W 4/70; H04W 4/021; H04W 4/38;** G01S 7/003;
G01S 13/862; G01S 13/865; G01S 13/867;
G01S 13/87; G01S 2013/9323; G01S 2013/9324

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH 70442 Stuttgart (DE)**

(72) Inventors:
• **Zafzouf, Ghassen**
  **31134 Hildesheim (DE)**
• **Wostradowski, Uwe**
  **71263 Weil Der Stadt-Merklingen (DE)**

(54)    **SELECTING A MOST SUITABLE DEVICE FOR A SENSING PROCEDURE**

(57)    The invention relates to a method (100) for selecting a most suitable device (10), comprising the following steps at a network element (20):

- Receiving (101) a message for initiating a sensing procedure to initiate a selection procedure for selecting the most suitable device (10),

wherein the message specifies at least one criterion with regard to a specific geographic area and a specific time duration,

- Assigning (102) at least one device (10) to a group of devices managed by the network element (20) according to the specific geographic area and the specific time duration,

- Checking (103) for each device (10) of the group of devices, if each device (10) fulfils at least one criterion of a first set of criteria, and,

if the result of the check is negative, such device (10) will be eliminated from the group of devices, and

if the result of the check is positive, such device (10) will remain in the group of devices,

- Computing (104) for each (10) of the remaining devices a result based on an objective function, wherein the result provides a measure for selecting the most suitable device for the sensing procedure,

- Selecting (105) the most suitable device based on an evaluation of the computed results,

- Sending (106) a request message to the selected (105) device (10), wherein the request message comprises a request for carrying out the sensing procedure by the selected device (10).

**Fig. 1**

EP 4 593 430 A1

## Description

The invention relates to a method for selecting a most suitable device for a sensing procedure. Furthermore, the invention relates to a network element, a device, computer program, and a storage medium for this purpose.

State of the art

Cellular networks based on telecommunication standards such as 4G- and/or 5G-New Radio are designed to mainly provide communication services. However, with the introduction of Integrated Communication and Sensing (ICAS) services in telecommunications technology, sensing could become an additional service offered for example by a cellular network such as a 6G telecommunications network. With regard to these new services such cellular networks are disadvantageously not yet capable of handling requesting and sharing sensing measurements in an efficient way.

Integrated Communication and Sensing (ICAS) refers to a technology that combines communication capabilities with sensing capabilities in a unified and integrated manner. This integration could enable devices or systems to not only transmit and receive data but also collect and process information from their surroundings through various sensors.

Disclosure of the invention

The above object is solved by a method with the features of claim 1, a network element with the features of claim 10, a device with the features of claim 12, a computer program with the features of claim 13 and a computer-readable storage medium with the features of claim 14. Further features and details of the invention are disclosed in the respective dependent claims, the description, and the drawings. Features and details described in the context of the method according to the invention also corresponds to the computer program according to the invention, the network element according to the invention as well as the computer-readable storage medium according to the invention, and vice versa in each case so that with respect to the disclosure concerning the individual aspects of the invention reference can always be made mutually.

The object is particularly solved by a method for selecting a most suitable device for a sensing procedure comprising the following steps at a network element:

- Receiving a message for initiating a sensing procedure to initiate a selection procedure for selecting the most suitable device,
  wherein the message specifies at least one criterion with regard to a specific geographic area and a specific time duration,
- Assigning at least one device to a group of devices managed by the network element according to the specific geographic area and the specific time duration,
- Checking for each device of the group of devices, if each device fulfils at least one criterion of a first set of criteria, and,

    if the result of the check is negative, such device will be eliminated from the group of devices, and
    if the result of the check is positive, such device will remain in the group of devices,

- Computing for each of the remaining devices a result based on an objective function, wherein the result provides a measure for selecting the most suitable device for the sensing procedure,
- Selecting the most suitable device based on an evaluation of the computed results,
- Sending a request message to the selected device, wherein the request message comprises a request for carrying out the sensing procedure by the selected device.

This has the advantage that sensing technologies can be advantageously integrated into the network communication. This allows to include various sensors like radar, lidar or sonar, to enable a variety of applications from machine learning to environmental monitoring. Further, this allows to increase the sensing activity advantageously focused in a local or specific geographical area. Furthermore, based on the technical capabilities of the new 6G telecommunication networks the inventive method can be utilized for applications such as autonomous vehicle, because of the very low latency times and the high transmission rates. The usage of an objective function has the effect of being capable of optimizing conditions and requirements in relation to a network problem. The objective function, also known as cost function, is a formula that represents a specific quantity or value that needs to be optimized, minimized, or maximized in a mathematical or optimization problem. It is a fundamental concept in various fields, including optimization or decision-making processes. The specific form of an objective function can vary widely depending on the problem at hand. For example, in calculus, it can be a function that needs to be minimized or maximized to find critical points.

It is possible that the method comprises the further following steps:

- Receiving a confirmation message from the selected device,
- Receiving a sensing measurement based on the carried out sensing procedure from the selected device.

This advantageously enables to perform a sensing procedure for the network element supported by a device. Further, this allows to obtain sensing measurements in relation to a specific geographic area where the selected device is located and/or with respect to a specific time duration for which the selected device is capable of providing sensing measurements. Optionally, the confirmation message from the selected device may be received in response to the sent request message.

It is further possible that the method comprises the further following steps:

- Receiving a rejection message from the selected device,
- Initiate the removal of the selected device from the assigned group of devices.

It is a possibility that the method comprises the further following steps:

- Checking if the assigned group of devices comprises at least one remaining device, and,
- if the result of the check is positive, the method proceeds with the step of computing for each of the remaining devices the result based on the objective function, and,
- if the result of the check is negative, the method proceeds with the following step:

  - Sending a message comprising an information that the performance of the sensing procedure is not possible for the specific geographic area and for the specific time duration.

This has the effect that the originally selected device will be disregarded in relation to the request and the network element can initiate a further selection procedure based on an internal checking procedure. This allows to search for another device which can be selected for the sensing procedure. Alternatively, the network element can stop the selection procedure based on the check and inform the requesting entity about it. Optionally, the rejection message from the selected device may be received in response to the sent request message.

It is a further possibility that the checking for each device of the group of devices comprises the further following step:

- Verifying a suitability of each device depending on the fulfilment of an eliminatory criteria constraint defining a criteria class in the first set of criteria, wherein the eliminatory criteria constraint specifies a condition in relation to a geographic coverage, a given time duration, a type of sensing data and/or a mobility pattern of the device.

This has the advantage that the verifying can be more flexible and faster based on the given criteria classes. Further, this allows reducing a power consumption in case the device does not fulfil an eliminatory criterion and will be directly discarded.

It is conceivable that during the selection the method comprises the further following step:

- Evaluating a fulfilment degree of the result of the objective function in relation to an optimisation objective of the objective function and on the measure for a deviation of the respective result from the optimization objective to select the most suitable device.

This allows to find and select the most suitable device in a much more efficient and effective way in relation to the optimizing of conditions and requirements by the objective function.

It is further conceivable that the objective function specifies the computation of the values of the variables of the objective function that optimize the objective function while adhering to a second set of criteria to provide the result.

It is possible that the second set of criteria comprises at least two classes of objectives to be optimized, wherein the first class is defined as utilities comprising objectives to be maximized with respect to the objective function, and/or the second class is defined as costs comprising objectives to be minimized with respect to the objective function.

This has the advantage to consider further criteria with respect to an effective selection of a suitable device.

It is possible that a communication between the network element and the group of devices is based on a sidelink communication, wherein the network element is a Master User Equipment, wherein the Master User Equipment and the group of devices are out of network coverage.

This has the effect that also advantageously in an out-of-coverage situation in an access network a network element such as a Master User Equipment can be chosen to coordinate a given task for a group of devices. Alternatively, it is also possible that only one further device instead of a group of devices can be coordinated by the Master User Equipment.

In another aspect of the invention a network element for selecting a most suitable device may be provided, the network element comprising means for carrying out the inventive method. It is further possible, that the network element comprises a base station and/or a Master User Equipment. Thus, the network element according to the invention can have the same advantages as have been described in detail with reference to the method according to the invention.

According to another aspect of the invention a device may be provided, the device comprising means for carrying out the following steps:

- Receiving a request message from a network element, preferably according to the invention, wherein the request message comprises a request for carrying out a sensing procedure,
- Checking if the request can be carried out depending on at least one criterion with regard to the sensing procedure, and if the result of the check is positive, a confirmation message is sent to the network element for carrying out a sensing measurement, and if the result of the check is negative, a rejection message is sent to the network element.

Thus, the device according to the invention can have the same advantages as have been described in detail with reference to the method according to the invention.

In another aspect of the invention, a computer program may be provided, in particular a computer program product, comprising instructions which, when the computer program is executed by a computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, a computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by a computer, cause the computer to carry out the steps of the method according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method.

Further advantages, features and details of the invention will be apparent from the following description, in which embodiments of the invention are described in detail with reference to the drawings. In this context, the features mentioned in the claims and in the description may each be essential to the invention individually or in any combination. Showing:

Fig. 1:    A method, computer program, a storage medium and network element according to embodiments of the invention,

Fig. 2:    A schematic overview according to embodiments of the invention,

Fig. 3:    A schematic diagram according to embodiments of the invention.

The objective of the invention is to provide sensing measurements for a network 1 covering a specific geographic area and which should be provided within a specific time duration. The core of the invention is an inventive procedure for a selection of a suitable device 10 or User Equipment 10 (U E). The procedure is based on solving an optimization problem with a defined objective function, which preferably is to be optimized, such that given criteria /constraints are fulfilled or satisfied.

With the emergence of Integrated Communication and Sensing (ICAS), the future 6G cellular network is expected to provide sensing services in addition to supporting communication among the connected User Equipment 10 or devices 10. In addition to the sensing measurements that would potentially be obtained from the ICAS signal, the network can also ask for sensing data measured by the UEs (using onboard sensors) to improve its own measurements. Therefore, an efficient procedure to select a suitable device for a sensing procedure should be provided. Further, an ICAS-capable entity should be understood as a device 10 or a base station 20 that is capable of sending, receiving, and processing ICAS signal. ICAS sensing (3GPP sensing) is to be understood as when the sensing is performed using the 3GPP (cellular) radio signals impacted (e.g., reflected, refracted, diffracted) by an object or environment of interest. Non-ICAS Sensing (non-3GPP sensing) should be understood as measurements generated by non-3GPP sensors like a radar, a camera, a lidar or a sonar.

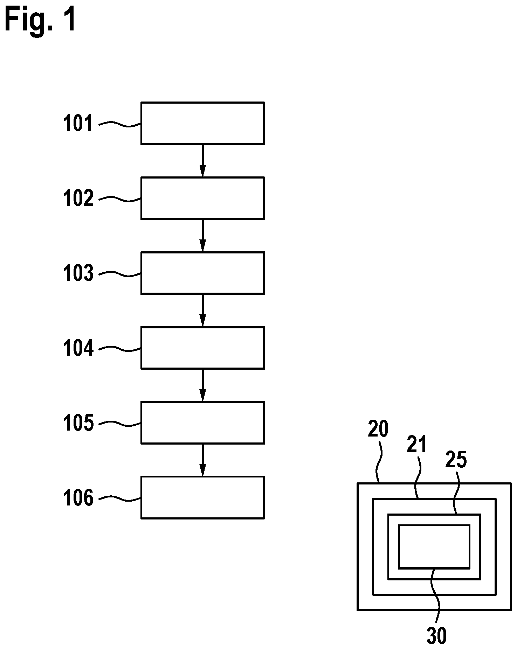

Fig. 1 depicts a method 100, a network element 20, a computer program 30, a storage medium 25 and a computer 21 according to embodiments of the invention. Fig. 1 shows a method 100 for selecting a most suitable device for a sensing procedure. The method 100 according to embodiments of the invention comprises the following steps, which are carried out at a network element 20:

At step 101 a message for initiating a sensing procedure to initiate a selection procedure for selecting the most suitable device 10 is received. The message specifies at least one criterion with regard to a specific geographic area and a specific time duration. In step 102 at least one device 10 is assigned to a group of devices managed by the network element 20 according to the specific geographic area and the specific time duration. Then, at step 103 it is checked for each device 10 of the group of devices, if each device 10 fulfils at least one criterion of a first set of criteria, and, if the result of the check is negative, such device 10 will be eliminated from the group of devices, and if the result of the check is positive, such device 10 will remain in the group of devices. In step 104 for each 10 of the remaining devices a result is computed based on an objective function. The result provides a measure for selecting the most suitable device for the sensing procedure. In step 105 the most suitable device is selected based on an evaluation of the computed results. At step 106 a request message is sent to the selected 105 device 10. The request message comprises a request for carrying out the sensing procedure by the selected device 10.

Fig. 1 further shows a network element 20, in particular a base station 20, which comprises a computer 21 and a computer-readable storage medium 25. The computer-readable storage medium 25 comprises a computer program 30.

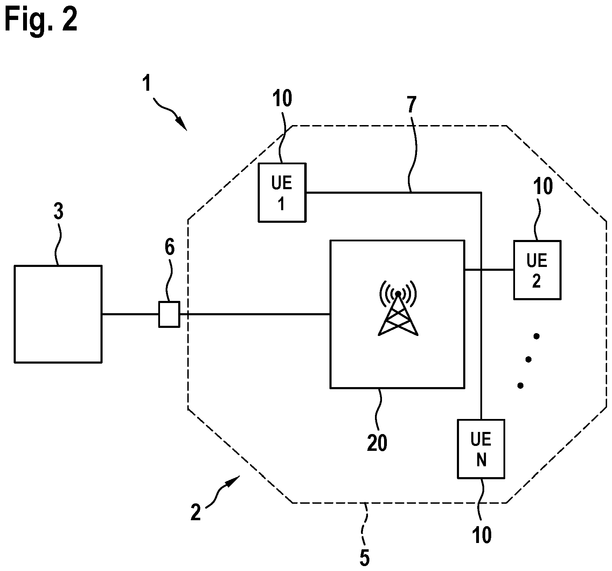

Fig. 2 depicts a schematic overview of a 6G - telecommunications network 1, The network 1 comprises a Radio Access Network 2 (RAN) and a core network 3. The radio access network 2 comprises base stations 20 for setting up a cellular infrastructure for a device 10 or User Equipment 10. The Radio Access Network 2 is responsible for handling the transmission and reception of radio signals between devices 10 and the network infrastructure. A base station 20 of the Radio Access Network 2 can manage the connected devices 10 within a cell 5 of the access network 2. The cell 5 can specify a specific geographic area. The access network 2 can connect devices 10 to the core network 3 and can enable wireless communication. The device 10 can enable a user access to various network services of the network 1. The core network 3 is responsible for establishing a reliable and secure connectivity to the network for end users and providing access to its service.

The core network 3 can be assigned a task of receiving and sending sensing requests from and to devices 10 via the RAN 2.

An Xn-interface 6 is an interface according to 3GPP standardization and is located between the core network 3 and the Radio Access Network 2. The 6G-Uu-interface 7 shows a communication link between the devices 10 and the RAN 2.

The User Equipment 10 can be a communication-able device that can be for example equipped with an arbitrary number and types of sensors, such as cameras, radars, lidars, or can also comprise an Intelligent Transportation System (ITS).

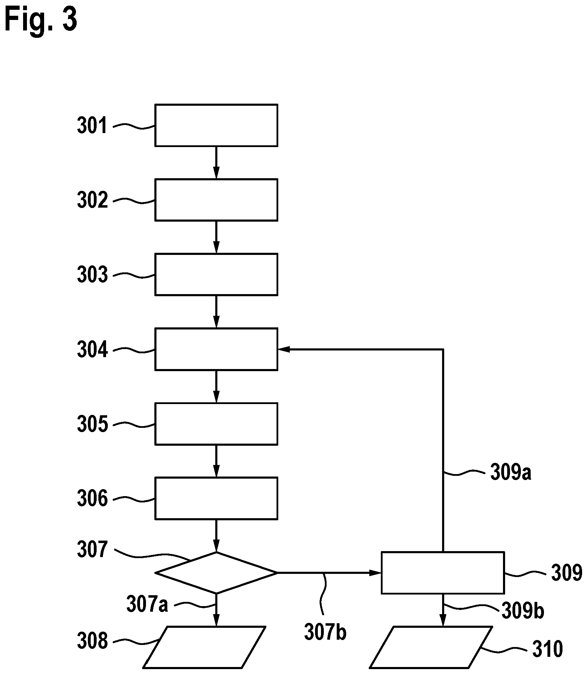

Fig. 3 depicts a schematic diagram of an exemplary method according to embodiments of the invention. In step 301 a triggering message is received by a base station 20 or a gNB 20. The gNB 20, also called Next-Generation NodeB, serves as a base station 20, similar to its predecessors in earlier generations of mobile networks (e.g., 4G LTE). The base station 20 acts as a central point in the radio access network infrastructure for connecting mobile devices to the network. The triggering message can comprise information for a sensing procedure to be carried out such as the desired area to be covered, the specific timeframe (for how long the triggering agent needs the measurements?), or all other required information which can be interpreted as constraints.

At step 302 a set of User Equipment 10 (UE) is assigned or initialized, wherein this set is managed by the base station 20 or gNB 20. This set is represented by $\mathcal{N}$ as the set of UEs for the computation of the objective function. In order to quantify the suitability of the i-th User Equipment, where $i \in \{1, ..., N\}$, the following criteria comprised in a first set of criteria can be considered such as a type of sensing data, Quality of measurements, Cost of sharing the measurements, Willingness of sharing the measurements and/or Mobility pattern of the User Equipment 10.

The type of sensing data specifies the type of data to be communicated, i.e., camera, radar, lidar or other type of data. The quality of measurements can be estimated using the quality of previous measurements (using the mean squared error as a metric, for example). The cost of sharing the measurements specifies the case that the User Equipment 10 shares its measurements and receives in return some sort of remuneration (could be in the form of points, for instance). The willingness of sharing the measurements can be considered by measuring the previous behaviour of the UE 10 e.g. based on history track). The willingness can be described in different ways based on the information at hand. One example could be to use the number of accepted requests by the UE 10 as a measure of its willingness to share data. This would be a non-negative integer number with respect of using the objective function. Another example could be If the total number of requests sent to the UE is available, then the willingness factor can be expressed as a probability by dividing the number of accepted requests by the number of total requests, which would yield a fairer comparison among the UEs 10.

The mobility pattern of the User Equipment 10 specifies estimating whether the delivered measurements by the selected UE are going to cover the desired area. The above-mentioned criteria out of the first set of criteria can be further differentiated by using various classes of criteria, which can be used as eliminatory criteria for example in such a way that, if one of the above criteria or conditions are not fulfilled for the i-th UE 10, the device is directly eliminated from the assigned set of devices. Classes of criteria can comprise eliminatory criteria constraints such as a geographic coverage, a given time duration, a type of sensing data and depending on the use case the mobility pattern of the UE. With respect to the assignment and elimination procedure in step 303 there are $J \in \mathbb{N}$ constraints, the symbol $c_j$ denotes the $j$-th constraint, where $j \in [1: J]$. The decision-making is dependent on the fulfilment of the condition if the $i$-th UE fulfils the $j$-th constraint $c_j$ when the conditions implied by $c_j$ such as coverage area or timeframe are met by UE $i$, and we write $i \models c_j$. According to step 303 each User Equipment 10 is eliminated from the assigned set of the UEs, in case such a User Equipment 10 does not fulfil or not satisfying at least one of the constraints, represented as $\{c_j\}_{j=1} : J$ with j going from 1 to J for the objective function. The constraints are included in a first set of criteria.

In step 304 an objective function is computed for each of the remaining devices 10 in the assigned set of the devices ($\mathcal{N}$). The result of the computed objective function is used for selecting the most suitable device or User Equipment 10 for a sensing procedure.

The objective function can be for example

$$f(i) = \sum \left(q_\ell^{<i>}\right)^2 - \left(p_m^{<i>}\right)^2, \; \forall i \in [1: N]$$

$$\forall \ell \in [1: |Q|],$$

$$\forall m \in [1: |\mathcal{P}|]$$

$\mathbb{N}$ denotes the set of non-negative integer numbers,

$\mathbb{R}$ denotes the set of real numbers,
[$m$:$n$] is the sequence of integers $\{m,\ m + 1,\ ...,\ n - 1,\ n\}$,
[$a$, $b$] is the set of real numbers $x$ such that $a \leq x \leq b$,

$|\mathcal{A}|$ denotes the cardinality (i.e., the number of elements) of the set $\mathcal{A}$,
$\forall$ denotes "for all".

The above exemplary objective function to be maximized is not restrictive. It is also possible to use any other objective function that allows maximizing the utilities and minimizing the costs.

Then, in step 305 the most suitable User Equipment 10 is selected based on an evaluation of the computed results. In other words: Select the UE $l_*$ with the maximal $f(l^*)$. This means that in this step 305 a fulfilment degree of the result of the objective function is evaluated in relation to an optimisation objective of the objective function and on the measure of how well the respective result of the objective function fulfils the optimization objective to select the most suitable device. The objective function specifies the computation of the values of the variables of the objective function that optimize the objective function while adhering to a second set of criteria to provide the result. The second set of criteria comprises at least two classes of objectives to be optimized, wherein the first class is defined as utilities comprising objectives to be maximized with respect to the objective function, and/or the second class is defined as costs comprising objectives to be minimized with respect to the objective function. The decision-making entity such as the base station 20 aims to optimize the conditions represented by using the objective function comprising a set of (flexible) criteria.

Such criteria are called objectives. There are for example two classes of objectives.

One class is called Utilities, utilities are objectives to be maximized, such as for example willingness factor and/or quality of measurements. $Q$ representing the set of such objectives with regard to the objective function. Further, for the $\ell$-th objective, where $\ell \in [1: |Q|]$, the device $i$ is associated with a parameter $q_\ell^{<i>} \in \mathbb{R}$.

The other class is called Costs. Costs are objectives to be minimized, like for example the cost of sharing. With regard to the objective function this can be represented by $\mathcal{P}$ as the set of such objectives. For the $m$-th objective, where $m \in [1: |\mathcal{P}|]$, the device $i$ is associated with a parameter $p_m^{<i>} \in \mathbb{R}$.

In other words, the problem of selecting the most suitable UE corresponds to finding the one device that fulfils all of the constraints, maximizes the utilities, and minimizes the costs.

In step 306 a request is sent to the selected UE $l^*$ for carrying out the sensing procedure. In step 307 the decision of the device 10 is performed either confirming 307a to proceed with carrying out the sensing procedure by sharing sensing measurements 308 or rejecting 307b share sensing measurements. If the device 10 rejects 307b, this device 10 or User Equipment 10 will be removed from the list of devices in step 309. In the latter case the base station 20 can check, if there is still a further device available on the list of the assigned set of (remaining) devices to possibly share sensing measurements for the base station 20. If the result is positive 309a, then the base station would continue with step 304. If the result is negative 309b, the base station 20 can send a message at step 310 comprising an information that the sensing procedure is not possible for the specified area and for the specific time duration.

Alternatively, in another embodiment (not depicted) the inventive method can also be applied when the devices 10 are not managed by a base station 20, which means an out-of-coverage scenario is existent. In this case, instead of having a communication link for uplink and downlink between devices 10 and base station 20, it is possible having a connection between devices via a sidelink communication, which means having a cluster or group of devices 10 or User Equipment 10 communicating with each other over a sidelink channel. In such a scenario a single "master UE" 20 can act "base station-like" according to the inventive method. In other words, the above explained procedure of Fig. 3 remains the same with the "master UE" 20 replacing the base station 20 (gNB). Sidelink Communication refers to a direct wireless communication link established between nearby devices, such as smartphones, IoT devices, or vehicles, without the need for a centralized network infrastructure. This short-range, peer-to-peer communication enables devices to exchange data directly, facilitating various applications like device-to-device data sharing, local discovery, and cooperative services.

The above explanation of the embodiments describes the present invention in the context of examples. Of course, individual features of the embodiments can be freely combined with each other, provided that this is technically reasonable, without leaving the scope of the present invention.

## Claims

1. A method (100) for selecting a most suitable device (10), comprising the following steps at a network element (20):

   - Receiving (101) a message for initiating a sensing procedure to initiate a selection procedure for selecting the most suitable device (10),
   wherein the message specifies at least one criterion with regard to a specific geographic area and a specific time duration,
   - Assigning (102) at least one device (10) to a group of devices managed by the network element (20) according to the specific geographic area and the specific time duration,
   - Checking (103) for each device (10) of the group of devices, if each device (10) fulfils at least one criterion of a first set of criteria, and,

      if the result of the check is negative, such device (10) will be eliminated from the group of devices, and
      if the result of the check is positive, such device (10) will remain in the group of devices,

   - Computing (104) for each (10) of the remaining devices a result based on an objective function, wherein the result provides a measure for selecting the most suitable device for the sensing procedure,
   - Selecting (105) the most suitable device based on an evaluation of the computed results,
   - Sending (106) a request message to the selected (105) device (10), wherein the request message comprises a request for carrying out the sensing procedure by the selected device (10).

2. The method (100) of claim 1,
   **characterized in that** the method (100) comprises the further following steps:

   - Receiving a confirmation message from the selected device (10),
   - Receiving a sensing measurement based on the carried out sensing procedure from the selected device (10).

3. The method (100) of any one of the preceding claims,
   **characterized in that** the method (100) comprises the further following steps:

   - Receiving a rejection message from the selected device (19),
   - Initiate the removal of the selected device (10) from the assigned (102) group of devices.

4. The method (100) of claim 3, **characterized in that** the method (100) comprises the further following steps:

   - Checking if the assigned (102) group of devices comprises at least one remaining device, and,

if the result of the check is positive, the method (100) proceeds with the step of computing (104) for each (10) of the remaining devices the result based on the objective function, and,
if the result of the check is negative, the method (100) proceeds with the following step:

- Sending a message comprising an information that the performance of the sensing procedure is not possible for the specific geographic area and for the specific time duration.

5. The method (100) of any one of the preceding claims, **characterized in that**
the checking (103) for each device (10) of the group of devices comprises the further following step:

- Verifying a suitability of each device (10) depending on the fulfilment of an eliminatory criteria constraint defining a criteria class in the first set of criteria, wherein the eliminatory criteria constraint specifies a condition in relation to a geographic coverage, a given time duration, a type of sensing data and/or a mobility pattern of the device (10).

6. The method (100) of any one of the preceding claims, **characterized in that** during the selecting (105) the method (100) comprises the further following step:

- Evaluating a fulfilment degree of the result of the objective function in relation to an optimisation objective of the objective function and on the measure for a deviation of the respective result from the optimization objective to select the most suitable device.

7. The method (100) of any one of the preceding claims, **characterized in that**
the objective function specifies the computation of the values of the variables of the objective function that optimize the objective function while adhering to a second set of criteria to provide the result.

8. The method (100) of claim 7,
**characterized in that** the second set of criteria comprises at least two classes of objectives to be optimized, wherein the first class is defined as utilities comprising objectives to be maximized with respect to the objective function, and/or the second class is defined as costs comprising objectives to be minimized with respect to the objective function.

9. The method (100) of any one of the preceding claims,
**characterized in that** a communication between the network element (20) and the group of devices is based on a sidelink communication, wherein the network element (20) is a Master User Equipment, wherein the Master User Equipment (20) and the group of devices (10) are out of network coverage.

10. Network element (20) for selecting a most suitable device (10), comprising means for carrying out the method (100) of any one of the preceding claims.

11. Network element (20) of claim 10, **characterized in that** the network element (20) comprises a base station and/or a Master User Equipment.

12. Device (10) comprising means for carrying out the following steps:

- Receiving a request message from a network element (20), preferably according to claim 10 or 11, wherein the request message comprises a request for carrying out a sensing procedure,
- Checking if the request can be carried out depending on at least one criterion with regard to the sensing procedure, and if the result of the check is positive, a confirmation message is sent to the network element (20) for carrying out a sensing measurement, and if the result of the check is negative, a rejection message is sent to the network element (20).

13. A computer program (30), comprising instructions which, when the computer program (30) is executed by a computer (21), cause the computer (21) to carry out the method (100) of any one of the claims 1 to 9.

14. A computer-readable storage medium (25) comprising instructions which, when executed by a computer (21), cause the computer (21) to carry out the steps of the method (100) of any one of claims 1 to 9.

# Fig. 1

# Fig. 2

# Fig. 3

301
302
303
304
305
306
307
307a
308
307b
309
309a
309b
310

Europäisches
Patentamt

European
Patent Office

Office européen
des brevets

**EUROPEAN SEARCH REPORT**

Application Number

EP 24 15 3464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/324541 A1 (ZORGUI MARWEN [US] ET AL) 12 October 2023 (2023-10-12)<br>* abstract *<br>* paragraphs [0042], [0059]; figure 2 *<br>* paragraphs [0109] - [0118], [0121], [0128], [0136]; figure 8 * | 1-11,13, 14 | INV.<br>H04W4/021<br>H04W4/38<br>H04W4/70<br>H04W8/00 |
| X | WO 2023/093644 A1 (VIVO MOBILE COMMUNICATION CO LTD [CN]) 1 June 2023 (2023-06-01)<br>* paragraphs [0302] - [0305] * | 12 | |
| A | WO 2023/201736 A1 (BEIJING XIAOMI MOBILE SOFTWARE CO LTD [CN]) 26 October 2023 (2023-10-26)<br>* abstract *<br>* paragraphs [0065] - [0110] * | 1-14 | |

|  |
|---|
| TECHNICAL FIELDS SEARCHED (IPC) |
| H04W |

The present search report has been drawn up for all claims

| Place of search | Date of completion of the search | Examiner |
|---|---|---|
| The Hague | 24 May 2024 | Cattrysse, Tom |

EPO FORM 1503 03.82 (P04C01)

## ANNEX TO THE EUROPEAN SEARCH REPORT
## ON EUROPEAN PATENT APPLICATION NO.

EP 24 15 3464

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2024

| Patent document cited in search report | Publication date | Patent family member(s) | Publication date |
|---|---|---|---|
| US 2023324541 A1 | 12-10-2023 | CN 116325826 A | 23-06-2023 |
| | | EP 4229436 A1 | 23-08-2023 |
| | | KR 20230087469 A | 16-06-2023 |
| | | US 2023324541 A1 | 12-10-2023 |
| | | WO 2022081624 A1 | 21-04-2022 |
| WO 2023093644 A1 | 01-06-2023 | CN 116193612 A | 30-05-2023 |
| | | WO 2023093644 A1 | 01-06-2023 |
| WO 2023201736 A1 | 26-10-2023 | CN 117280765 A | 22-12-2023 |
| | | WO 2023201736 A1 | 26-10-2023 |

EPO FORM P0459

For more details about this annex : see Official Journal of the European Patent Office, No. 12/82